# EUROPEAN PATENT APPLICATION

(11) **EP 1 475 967 A1**
(43) Date of publication of application: **10.11.2004**
(21) Application number: 03706979.6
(22) Date of filing: 20.02.2003
(51) Int. Cl.: H04N 7/173

(54) **MEMORY SUPPORT SYSTEM**

(30) Priority: 20.02.2002 JP 2002043443
(71) Applicant: MATSUSHITA ELECTRIC INDUSTRIAL CO., LTD., Kadoma-shi, Osaka 571-8501 (JP)
(72) Inventor: MATSUDA, Junichi, Yokohama-shi, Kanagawa 224-0054 (JP)
(74) Representative: Grünecker, Kinkeldey, Stockmair & Schwanhäusser Anwaltssozietät
(86) International application number: PCT/JP2003/001842
(87) International publication number: WO 2003/071802

(57) **Abstract**

There are provided a portable information terminal 104 that creates audio visual information including image information and acoustic information by an image constantly shot at the monitoring position arbitrarily displaced and sound constantly collected thereat, adds time information to the audio visual information, and transmits it via a communication network 100, and a storage server 106 that stores the audio visual information and time information transmitted from the portable information terminal 104 via the communication network 100 and transmits the storage information via the communication network 100 according to a reference request of storage information including the audio visual information and time information.

## Description

### Technical Field

The present invention relates to a memory aid system that records all audio visual information daily obtained by a user together with a time code on a storage medium on a network and that enables a user to refer to arbitrary audio visual information recorded in the past.

### Background Art

Conventionally, the memory aid system that records auto visual information includes operation input means for inputting control information on equipment, select output means for selecting either one of image and speech information on a plurality of equipment to output, and record storage means for recording and storing image and speech information from the select and output means together with time information, wherein in a machine monitoring apparatus at a plant, audio visual information and time information collected at a fixed monitoring point are recorded on the recording medium (record and storage means)installed fixedly, and an input operation is particularly required to refer to stored audio visual information (Unexamined Japanese Patent Publication HEI No. 9-244739).

Moreover, the memory aid system of this type includes shooting means for shooting an entire area of an intersection having signal devices to output an image signal, first record and storage means for recording and storing composite image data that is obtained by superimposing shooting time information and signal device information on image data due to the image signal from the shooting means from the viewpoint of the image, and second record and storage means for fetching composite image data of a predetermined time zone from the record and storage means to record it on a detachable recording medium, wherein in an accident monitoring apparatus at the intersection, audio visual information and shooting time information collected at a fixed monitoring point of the intersection are recorded on the recording medium (first record and storage means)installed fixedly, and information is detached from the first record and storage means and recorded on the detachable recording means (second record and storage means) to refer to an amount corresponding to the predetermined time zone of the thus stored audio visual information (Unexamined Japanese Patent Publication HEI No. 6-203290).

In contrast to this, regarding the private case, audio visual information was not continued to be daily recorded directly. Instead, information daily obtained was aggregated with high order and integrated, and these information items were indirectly stored by characters and a language and reference was made thereto to perform daily information processing. For example, the use of a notebook, the use of a personal digital assistance (trade name: PDA), the user of a learner's notebook and the like correspond to this. Then, in order to faithfully and correctly record and refer to audio visual information such as image information, video information, sound information and the like for private use, recording and replaying were required to be performed using a special machine. For example, the use of a voice memo (trade name), the use of a still camera (trade name), the use of a video camera, and the use of an audio recorder correspond to this.

However, in such the conventional memory aid systems, there were provided conditions; the monitoring point was fixed, the recording medium, which was fixed and difficult to be carried, was also used accordingly, referring to the stored audio visual information was carried out in only the special case, and a special apparatus and its operation were needed, and the like, with the result that there was a problem in which it was difficult to use such the conventional memory aid system to record private daily life by being diverted to commercial use.

Moreover, in the aforementioned recording apparatus for private use, in many cases, timing when recording is started is decided by judgment of a person who performs recording because of the limitation of a recording medium capacity that this recording apparatus has and the limitation of portability. This caused a problem in which it was difficult to directly record audio visual information on an unexpected incident using these apparatuses.

### Disclosure of Invention

The present invention provides a memory aid system that overcomes limitations due to the size of a recording medium and the displacement of a monitoring point to allow constant recording of audio visual information that a user perceives in a daily life and time information when the audio visual information was perceived, and that enables to refer to arbitrary audio visual information perceived by the user in the past.

In the memory aid system of the present invention, a portable information terminal creates audio visual information including image information and acoustic information by images shot at a position arbitrarily displaced and sound collected thereat and transmits the audio visual information via a communication network, and a storage server makes time information accompany the audio visual information transmitted from the portable information terminal to store as storage information and transmits storage information via the communication network according to a reference request including time information.

### Brief Description of Drawings

FIG. 1 is a block diagram illustrating a memory aid system (recording time) according to a first embodiment of the present invention;
FIG. 2 is a block diagram illustrating a memory aid system (referring time) according to a first embodiment of the present invention;
FIG. 3 is a block diagram illustrating a memory aid system according to a second embodiment of the present invention;
FIG. 4 is a block diagram illustrating a memory aid system according to a third embodiment of the present invention;
FIG. 5 is a block diagram illustrating a memory aid system according to a fourth embodiment of the present invention;
FIG. 6 is a block diagram illustrating a memory aid system according to a fifth embodiment of the present invention;
FIG. 7 is a block diagram illustrating a memory aid system according to a sixth embodiment of the present invention;
FIG. 8 is a block diagram illustrating a memory aid system according to a seventh embodiment of the present invention; and
FIG. 9 is a block diagram illustrating a memory aid system according to an eighth embodiment of the present invention.

### Best Mode for Carrying Out the Invention

Embodiments of the present invention will be specifically explained with reference to the drawings.

### (First embodiment)

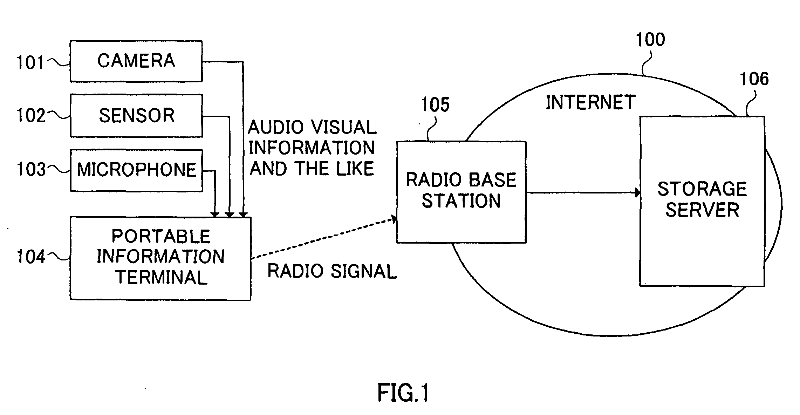

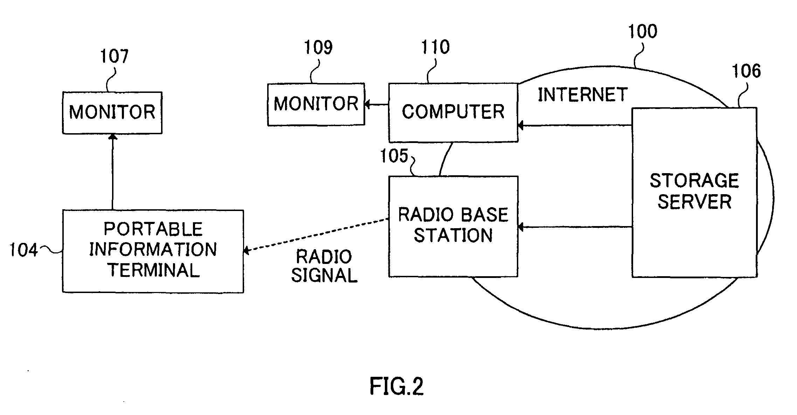

As illustrated in FIGS. 1 and 2, a memory aid system of a first embodiment of the present invention includes a camera 101 that shoots the circumstance of a monitoring position arbitrarily displaced and outputs an image signal, a microphone 103 that collects sound at the monitoring position arbitrarily displaced and outputs an acoustic signal, a portable information terminal 104 that has a radio communication function, inputs the image signal and the acoustic signal from the camera 101 and the microphone 103, radio transits audio visual information including image information and acoustic information created based on the image signal and a speech signal to a radio base station apparatus 105, transmits a reference request to a storage server 106 in which information including the audio visual information is stored to the radio base station 105, and reproduces storage information including the audio visual information sent from the radio base station 105, the radio base station 105 that is provided with a radio communication function, connected to Internet 100, adds time information to the audio visual information radio transmitted from the portable information terminal 104 to sent it to a storage server 106 via the Internet 100, transmits the reference request to the storage server 106 to the storage server 106 via the Internet 100, and radio transmits storage information including the audio visual information from the storage server 106 to the portable information terminal 104, and the storage server 106 that is connected to the Internet 100, stores information including the audio visual information and the time information transmitted from the radio base station 105, and transmits storage information including the audio visual information and the time information to the radio base station 105 according to the reference request transmitted via the Internet 100.

Additionally, FIG. 1 shows a connection state for recording various kinds of information, and FIG. 2 shows a connection state for recording various kinds of information. Moreover, in the explanation given below, it is assumed that processing such as encryption is provided to all communications on an information exchange, and this processing prevents data tampering and a fraud operation due to pretending.

In FIG. 1, the portable information terminal 104, which the user has, is connected to the camera 101, the sensor 102 and the microphone 103, which are provided at an arbitrarily movable monitoring position (for example, a user's body), and has a radio communication function, and swaps a radio signal with the radio base station 105. Moreover, the camera 101 is attached to the user's body and shoots the environmental circumstance of the user, and outputs an image signal to the portable information terminal 104. Further, the microphone 103 is attached to the user's body to collect the sound around the user, and outputs an acoustic signal to the portable information terminal 104. Moreover, the sensor 102 detects the attaching states of the camera 101 and the microphone 103 to the user's body and outputs a detection signal to the portable information terminal 104. Further, the portable information terminal 104 is provided with switching means (operation display section and the like) for switching the on-off state of the constant recording by the camera 101, the sensor 102 and the microphone 103. Namely, by the switching means, it is switched whether audio visual information, which is obtained by constantly turning on the camera 101, the sensor 102 and the microphone 103, is continuously stored in the storage server 106. The radio base station 105 is connected to the Internet 100, and further connected to the storage server 106 via the Internet 100 to enable to perform radio communication with the portable information terminal 104. The storage server 106 is connected to the Internet 100 and further connected to the radio base station 105 via the Internet 100. Further, the storage server 106 is provided with judging means (personal authenticating means) for judging whether access to the storage server 106 is valid, and permits only access by a preregistered user.

An explanation will next be given of a recording operation of the memory aid system according to the present embodiment. When receiving audio visual information (including image information and acoustic information) from the camera 101 and the microphone 103, the portable information terminal 104, which the user has, transmits the image information and the acoustic information to the radio base station 105 by radio communication. Additionally, information on the attaching states of the camera 101 and the microphone 103 detected by the sensor 102 are also transmitted to the radio base station 105 by the radio communication. Next, the radio base station 105 adds a code (time code) indicating time information to the image information and the acoustic information sent from the portable information terminal 104 and transmits it to the storage server 106 via the Internet 100. Sequentially, the storage server 106 stores the image information and the acoustic information sent from the radio base station 105 whenever necessary. Moreover, the storage server 106 also stores the image information and the acoustic information and information indicating the attaching states, and time information such time when these information items was obtained by the radio base station 105 simultaneously.

In FIG. 2, a monitor 107 is directly connected to the portable information terminal 104 and display controlled by the portable information terminal 104. A computer 110 is connected to the Internet 100, and further connected to the storage server 106 via the Internet 100. A monitor 109 is directly connected to the computer 110 and display controlled by the computer 110.

An explanation will next be given of a referring operation of the memory aid system of the present embodiment. When a reference request signal of storage information is sent to the storage server 106 from the portable information terminal 104, which the user has, via the radio base station 105 and the Internet 100, or the reference request signal of storage information is sent to the storage server 106 from the computer 110 via the Internet 100, the storage server 106 judges whether this is a valid access by the aforementioned personal authenticating means. Here, when it is judged that this is the valid access, the storage server 106 transmits a signal, which indicates storage information on such as the image, the sound, and the attaching states of the camera 101 and the microphone 103, onto the Internet 100 according to the aforementioned reference request. Then, the signal thus sent onto the Internet 100 is transmitted to the portable information terminal 104 via the Internet 100 and the radio base station 105 or transmitted to the computer 110 via the Internet 100 and subjected to reproduction processing by the terminal information terminal 104 and the computer 110. After being subjected to the reproduction processing in this way, the pertinent storage information is displayed on the monitor 107 or the monitor 109. Here, on the monitors 107 and 109, time information such as time when the pertinent storage information was obtained by the radio base station 105 is displayed together with the pertinent storage information.

As mentioned above, the memory aid system of the first embodiment of the present invention includes the camera 101 that shoots the circumstance of the monitoring position arbitrarily displaced and outputs the image signal, the microphone 103 that collects sound at the monitoring position arbitrarily displaced and outputs the acoustic signal, the portable information terminal 104 that has the radio communication function, inputs the image signal and the acoustic signal from the camera 101 and the microphone 103, radio transits audio visual information including image information and acoustic information created based on the image signal and the speech signal to the radio base station apparatus 105, transmits the reference request to a storage server 106 in which information including the audio visual information is stored to the radio base station 105, and reproduces storage information including the audio visual information sent from the radio base station 105, the radio base station 105 that is provided with the radio communication function, connected to the Internet 100, adds time information to the audio visual information radio transmitted from the portable information terminal 104 to sent it to the storage server 106 via the Internet 100, transmits the reference request to the storage server 106 to the storage server 106 via the Internet 100, and radio transits storage information including the audio visual information from the storage server 106 to the portable information terminal 104, and the storage server 106 that is connected to the Internet 100, stores information including the audio visual information and the time information transmitted from the radio base station 105, and transmits storage information including the audio visual information and the time information to the radio base station 105 according to the reference request transmitted via the Internet 100. Accordingly, the audio visual information obtained by the camera 101 and the microphone 103 attached to the human body are recorded at all times, setting the user of the audio visual information free from the judgment on the circumstance for starting the recoding and the labor of the equipment operation. Moreover, even if an unexpected incident happens to the user, the audio visual information at this time is all recorded. Moreover, the recording medium of audio visual information (included in the storage server 106) is placed on the network, thereby allowing release from the limitation of the amount of recordable information due to the capacity of the carrying recording medium (included in the portable information terminal 104) and release from the risk of losing information due to the damage of the recording medium and the like. Moreover, in the storage server 106, since audio visual information is recorded and time information, which indicates time when such information was recorded, is recorded, it is possible to centralize management using time information such as recoding time in connection with the management of audio visual information stored in the storage server 106. This makes it possible to prevent the situation in which the user cannot find out necessary audio visual information to fall into the same circumstance as the case in which audio visual information is lost.

Moreover, since the memory aid system of the first embodiment of the present invention includes computer 110 that is connected to the Internet 100 to reproduce the audio visual information and the time information sent from the storage server 106 according to the reference request, persons excepting the user to which the camera 101 and the microphone 103 are attached can monitor audio visual information of the user via the Internet 100.

Additionally, the above embodiment explained the case in which the authenticating means provided in the storage server 106 was used as means for maintaining the security of the storage server 106 at the referring time. However, the present invention can obtain the same effect even if personal authenticating means that performs personal authentication to judge the user to which the camera 101, the microphone 103 and the sensor 102 are attached is valid or personal authenticating means provided to maintain the security at the registering time to the storage server 106 is used besides the authenticating means provided in the storage server 105.

Moreover, the above embodiment explained the case in which one having the function that detects the attaching state to the body was used as the sensor 102 attached to the user's body. However, the present invention can obtain the same effect even if one having a function that detects information on the sense of touch, information on the sense of taste, information on the sense of smell, and body information (for example, a heartbeat, a body inclination state and the like) in addition to the attaching state to the body.

Furthermore, the above embodiment explained the case in which the code indicative of obtaining time of the audio visual information was added in the radio base station 105. However, in addition to this, the present invention can obtain the same effect even if a configuration that adds a code indicative of obtaining time of the audio visual information (herein, input time from the camera 101, the sensor 102, and the microphone 103) in the portable information terminal 104 and a configuration that adds a code indicative of obtaining time of the audio visual information (herein, storage time of the storage information) in the storage server 106 are used. In the case of using such the configurations, time information such as time when the pertinent audio visual information (image information and acoustic information) was stored in the storage server 106 and time when the pertinent audio visual information was obtained by the portable information terminal 104 is simultaneously stored, and time information such as time when the pertinent audio visual information was stored and time when the pertinent information was obtained by the portable information terminal 104 is displayed on the monitors 107 and 109.

Here, in the configuration having the portable information terminal 104 that creates audio visual information including image information and acoustic information by the image constantly shot at the monitoring position arbitrarily displaced and sound constantly collected thereat, adds time information to the audio visual information, and transmits it via the communication network such as the radio communication network and the Internet 100, and the storage server 106 that stores the audio visual information and time information transmitted from the portable information terminal 104 via the communication network and transmits the storage information via the communication network according to the reference request of storage information including the audio visual information and time information, this configuration enables to constantly record and store audio visual information that the user perceives in the daily life and refer to arbitrary audio visual information perceived by the user in the past by use of time information such as time when the audio visual information was perceived.

Additionally, in the case where the aforementioned acoustic information is recorded, not only the use of the monophonic recording but also the use of a stereo system using a stereo microphone and the use of a surround system such as a binaural recording using microphones provided in both auricles enable to record acoustic information with a higher sense of realism. Furthermore, it is possible to determine the position of an acoustic image perceived at the time of referring to recording record. Moreover, an embodiment that enables recoding in the form that distance information is added to user's visual information can be easily realized by converting the record of visual information to stereo.

### (Second embodiment)

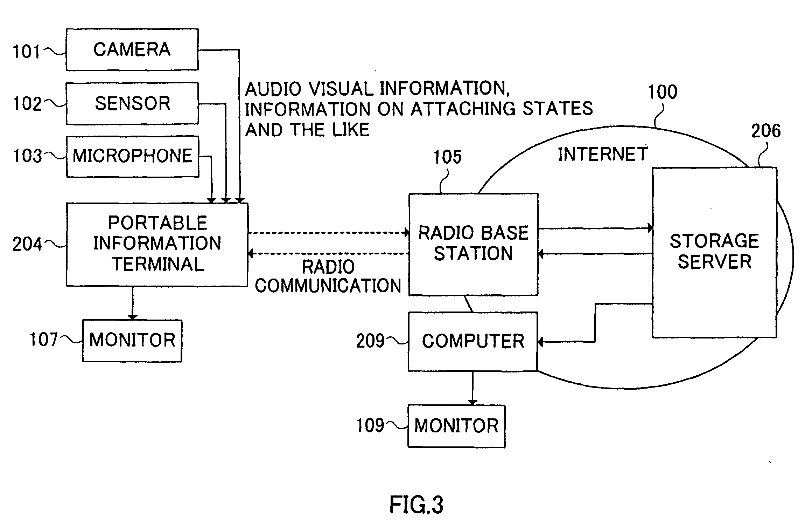

FIG. 3 is a general block diagram of a second embodiment of the present invention. This is different from the first embodiment in the points that the camera 101 and the microphone 103 are attached to the human body as a protecting object and storage information stored in a storage server 206 is used as security information. According to this configuration, since audio visual information at the user position in the daily life is constantly recorded and stored on the storage server 206, it is possible to obtain an effect in which the user can use this audio visual information as security information. Moreover, since the audio visual information is recorded on the storage server 206 together with time when the user perceived this and the audio visual information is managed at one time on the storage server 206, it is possible to obtain an effect in which the audio visual information is easily prevented from being tampered.

In FIG. 3, the camera 101 and the microphone 103, which are attached to the user's body, are connected to a portable information terminal 204, which the user has, and the sensor 102, which detects the attaching states of the camera 101 and the microphone 103, is connected thereto. Moreover, the portable information terminal 204 is provided with switching means (operation display section and the like) for switching the on-off state of the constant recording by the camera 101, the sensor 102 and the microphone 103. Namely, by the switching means, it is switched whether audio visual information, which is obtained by constantly turning on the camera 101, the sensor 102 and the microphone 103, is continuously stored in the storage server 206. Moreover, the monitor 107 is directly connected to the portable information terminal 204. Further, the portable information terminal 204 includes a radio communication function and swaps a radio signal with the radio base station 105. The radio base station 105 is connected to the Internet 100, and further connected to the storage server 206 via the Internet 100 to enable to perform radio communication with the portable information terminal 104. The storage server 206 is connected to the Internet 100 and further connected to the radio base station 105 via the Internet 100. Further, the storage server 206 is provided with judging means (personal authenticating means) for judging whether access to the storage server 206 is valid, and permits only access by a preregistered user. A monitor 109 is directly connected to a computer 209. Furthermore, the computer 209 is connected to the Internet 100, and further connected to the storage server 206 via the Internet 100.

An explanation will next be given of a recording operation of the memory aid system according to the present embodiment. Audio visual information obtained by the camera 101 and the microphone 103 attached to the user' s body is input to the portable information terminal 204 as security information, thereafter being radio transmitted to the radio base station 105. Additionally, in order to prevent fraud such as replacement of the camera 101 and the microphone 103, information on the attaching states from the sensor 102 is included in audio visual information transmitted from the portable information terminal 204. Sequentially, the radio base station 105 adds a code (time code), which indicates time when the audio visual information was obtained by the radio base station 105, to the transmitted audio visual information and transmits it to the storage server 206 as security information via the Internet 100. The storage server 206 records the transmitted security information.

An explanation will next be given of a referring operation of the memory aid system of the present embodiment. When a reference request signal of storage information is sent to the storage server 206 from the portable information terminal 204 via the radio base station 105 and the Internet 100, or the reference request signal of storage information is sent to the storage server 206 from the computer 110 via the Internet 100, the storage server 206 judges whether this is a valid access by the aforementioned personal authenticating means. Here, when it is judged that this is the valid access, a signal, which indicates audio visual information such as the image and sound and time information, is transmitted as security information onto the Internet 100 from the storage server 206 according to the reference request. The signal thus transmitted onto the Internet 100 is transmitted to the portable information terminal 204 via the Internet 100 and the radio base station 105, or transmitted to the computer 209 via the Internet 100 to be subjected to reproduction processing by the portable information terminal 204 or the computer 209. After being subjected to the reproduction processing in this way, the pertinent audio visual information is displayed on the monitor 107 or the monitor 109. Here, on the monitors 107 and 109, time information such as time when the pertinent audio visual information was obtained by the portable information terminal 204 is displayed together with the pertinent storage information.

Here, the following will explain an effect when the memory aid system of the present embodiment is used. When the memory aid system of the present embodiment is used, the user can perform constant recording of audio visual information in the daily life. Accordingly, since audio visual information on the time when some accident happens to the user is also stored on the storage server 206, the user can use the audio visual information as a record on security or an evidence of the accident. Additionally, the audio visual information is recorded on the storage server 206 together with time when the user perceived this. Also, since storage of the audio visual information is performed on the storage server 206 at one time, the audio visual information can be easily prevented from being tampered.

The feature on the system configuration can ensure reliability as the evidence of audio visual information recorded on the storage server 206 to enable to use the recorded audio visual information as evidence at trial. Moreover, since the audio visual information can be handled as evidence, the audio visual information can be used when the user is a plaintiff or a defendant at trial and when the user gives evidence as a witness. Moreover, it is possible to cooperate on the police investigation of a case and an insurance survey depending on the user's wish.

Additionally, the above embodiment explained the case in which the authenticating means provided in the storage server 206 was used as means for maintaining the security of the storage server 206 at the referring time. However, the present invention can obtain the same effect even if personal authenticating means that performs personal authentication to judge the user to which the camera 101, the microphone 103 and the sensor 102 are attached is valid or personal authenticating means provided to maintain the security at the registering time to the storage server 206 is used besides the authenticating means provided in the storage server 206.

Moreover, the above embodiment explained the case in which one having the function that detects the attaching state to the body was used as the sensor 102 attached to the user's body. However, the present invention can obtain the same effect even if one having a function that detects information on the sense of touch, information on the sense of taste, information on the sense of smell, and body information (for example, a heartbeat, a body inclination state and the like) in addition to the attaching state to the body.

Furthermore, the above embodiment explained the case in which the code indicative of obtaining time of the audio visual information was added in the radio base station 105. However, in addition to this, the present invention can obtain the same effect even if a configuration that adds a code indicative of obtaining time of the audio visual information (herein, input time from the camera 101, the sensor 102, and the microphone 103) in the portable information terminal 204 and a configuration that adds a code indicative of obtaining time of the audio visual information (herein, storage time of the storage information) in the storage server 206 are used. In the case of using such the configurations, time information such as time when the pertinent audio visual information (image information and acoustic information) was stored in the storage server 206 and time when the pertinent audio visual information was obtained by the portable information terminal 204 is simultaneously stored, and time information such as time when the pertinent audio visual information was stored and time when the pertinent information was obtained by the portable information terminal 204 is displayed on the monitors 107 and 109.

Additionally, in the case where the aforementioned acoustic information is recorded, not only the use of the monophonic recording but also the use of a stereo system using a stereo microphone and the use of a surround system such as a binaural recording using microphones provided in both auricles enable to record acoustic information with a higher sense of realism. Furthermore, it is possible to determine the position of an acoustic image perceived at the time of referring to recording record. Moreover, an embodiment that enables recoding in the form that distance information is added to user's visual information can be easily realized by converting the record of visual information to stereo.

### (Third embodiment)

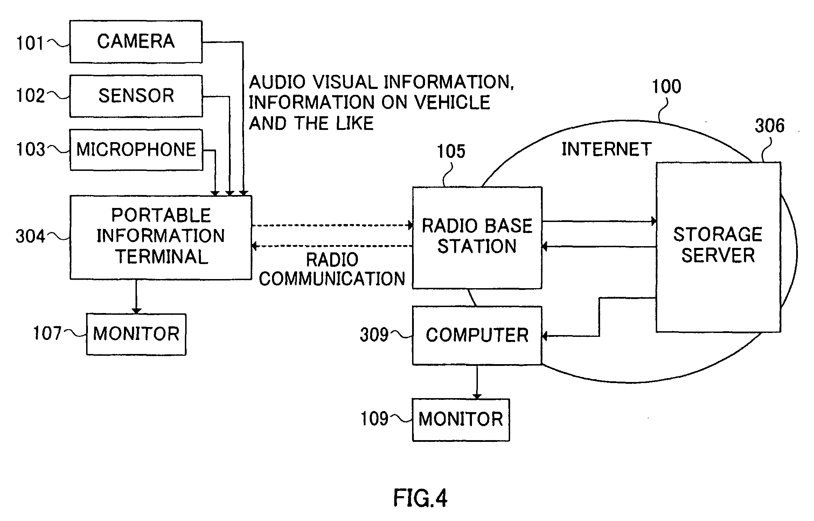

FIG. 4 is a general block diagram of a third embodiment of the present invention. This is different from the first embodiment in the points that the camera 101 and the microphone 103 are attached to a vehicle or a human body in the vehicle, a sensor 202 that detects vehicle states including a brake state of the vehicle, running speed, and acceleration is provided, and information on the vehicle states is included in storage information stored in a storage server 306. According to this configuration, it is possible to obtain an effect that aids the driving of the user's car and motor cycle to contribute to traffic safety for users and other people.

In FIG. 4, the camera 101 and the microphone 103, which are attached to the user or the vehicle, are connected to a portable information terminal 304 that is attached to the user or the vehicle, and the sensor 202, which detects the vehicle states (the brake state, running speed, and acceleration, and the like) is connected thereto. Moreover, the portable information terminal 304 is provided with switching means (operation display section and the like) for switching the on-off state of the constant recording by the camera 101, the sensor 202 and the microphone 103. Namely, by the switching means, it is switched whether audio visual information, which is obtained by constantly turning on the camera 101, the sensor 202 and the microphone 103, is continuously stored in the storage server 306. Moreover, the monitor 107 is directly connected to the portable information terminal 304. Further, the portable information terminal 304 includes a radio communication function and swaps a radio signal with the radio base station 105. The radio base station 105 is connected to the Internet 100, and further connected to the storage server 306 via the Internet 100 to enable to perform radio communication with the portable information terminal 304. The storage server 306 is connected to the Internet 100 and further connected to the radio base station 105 via the Internet 100. Further, the storage server 306 is provided with judging means (personal authenticating means) for judging whether access to the storage server 306 is valid, and permits only access by a preregistered user. The monitor 109 is directly connected to a computer 309. Furthermore, the computer 309 is connected to the Internet 100, and further connected to the storage server 306 via the Internet 100.

An explanation will next be given of a recording operation of the memory aid system according to the present embodiment. Audio visual information (including image information and acoustic information) obtained by the camera 101 and the microphone 103 attached to the user or the vehicle is input to the portable information terminal 304 as driving information, thereafter being radio transmitted to the radio base station 105. Here, information on numerical values showing vehicle states (the brake state, running speed, and acceleration, and the like) from the sensor 102 is included in audio visual information transmitted from the portable information terminal 304. Sequentially, the radio base station 105 adds a code (time code), which indicates time when the audio visual information was obtained, to the transmitted audio visual information and transmits it to the storage server 306 as driving information via the Internet 100. The storage server 306 records the transmitted driving information.

An explanation will next be given of a referring operation of the memory aid system of the present embodiment. When a reference request signal of storage information is sent to the storage server 306 from the portable information terminal 304 via the radio base station 105 and the Internet 100, or the reference request signal of storage information is sent to the storage server 306 from the computer 110 via the Internet 100, the storage server 306 judges whether this is a valid access by the aforementioned personal authenticating means. Here, when it is judged that this is the valid access, a signal, which indicates the audio visual information (including information on numeral values showing the vehicle states) and time information such as the above time, is transmitted as driving information onto the Internet 100 from the storage server 306 according to the reference request. The signal thus transmitted onto the Internet 100 is transmitted to the portable information terminal 304 via the Internet 100 and the radio base station 105, or transmitted to the computer 309 via the Internet 100 to be subjected to reproduction processing by the portable information terminal 304 or the computer 309. After being subjected to the reproduction processing in this way, the pertinent audio visual information is displayed on the monitor 107 or the monitor 109. Here, time information such as a code (time code) , which indicates time when the pertinent storage information was obtained by the radio base station 105, and information on the numeral values showing the vehicle states are displayed on the monitors 107 and 109 together with the pertinent storage information.

Here, the following will explain an effect when the memory aid system of the present embodiment is used. According to the present embodiment, it is possible to aid the driving of the user's car and motor cycle to contribute to traffic safety for users and other people. First of all, since the user can refer to audio visual information on the others in driving that are open to the public, it is possible to experience a simulated driving to a destination before driving. Next, the user records all of audio visual information perceiving at the driving time. Since all of audio visual information at the driving time are recorded, the user can refer to a landscape that can be seen in driving after driving. This enables to confirm the location of a shop found out in driving, an intersection where failure in turning occurred, other vehicles, motor cycles, bicycles that were dangerously driven, pedestrians who crossed dangerously and the like after driving. The present invention enables the user to manage the driving record by use of not only a daily report but also audio visual information. The present system has a feature in which the recorded audio visual information can be used as evidence similar to the security system as in the aforementioned embodiment, and this feature causes an effect that prevents an unfair traffic crackdown by police. Moreover, this effect is more ensured by recording the states of the vehicle as evidence using the sensor 202 that detects the states of the vehicle. Further, when the user leaves the vehicle, the portable information terminal 304, the camera 101, and the microphone 103 are installed in the vehicle, and thereby they can be used as a vehicle crime prevention system. An insurance company uses the memory aid system of the present embodiment to enable to refer to the record relating to the accident and this can be used as evidence to make it easy to ensure reliability of testimony relating to the accident. This enables the insurance company to reduce time and effort to survey the automobile insurance.

Additionally, the above embodiment explained the case in which the authenticating means provided in the storage server 306 was used as means for maintaining the security of the storage server 306 at the referring time. However, the present invention can obtain the same effect even if personal authenticating means that performs personal authentication to judge the user to which the camera 101, the microphone 103 and the sensor 202 are attached or the vehicle is valid or personal authenticating means provided to maintain the security at the registering time to the storage server 306 is used besides the authenticating means provided in the storage server 306.

Moreover, the above embodiment explained the case in which one having the function that detects the attaching state to the body was used as the sensor 202 attached to the user's body. However, the present invention can obtain the same effect even if one having a function that detects information on the sense of touch, information on the sense of taste, information on the sense of smell, and body information (for example, a heartbeat, a body inclination state and the like) in addition to the attaching state to the body.

Furthermore, the above embodiment explained the case in which the code indicative of obtaining time of the audio visual information was added in the radio base station 105. However, in addition to this, the present invention can obtain the same effect even if a configuration that adds a code indicative of obtaining time of the audio visual information (herein, input time from the camera 101, the sensor 202, and the microphone 103) in the portable information terminal 304 and a configuration that adds a code indicative of obtaining time of the audio visual information (herein, storage time of the storage information) in the storage server 306 are used. In the case of using such the configurations, time information such as time when the pertinent audio visual information (image information and acoustic information) was stored in the storage server 306 and time when the pertinent audio visual information was obtained by the portable information terminal 304 is simultaneously stored, and time information such as time when the pertinent audio visual information was stored and time when the pertinent information was obtained by the portable information terminal 304 is displayed on the monitors 107 and 109.

Additionally, in the case where the aforementioned acoustic information is recorded, not only the use of the monophonic recording but also the use of a stereo system using a stereo microphone and the use of a surround system such as a binaural recording using microphones provided in both auricles enable to record acoustic information with a higher sense of realism. Furthermore, it is possible to determine the position of an acoustic image perceived at the time of referring to recording record. Moreover, an embodiment that enables recoding in the form that distance information is added to user's visual information can be easily realized by converting the record of visual information to stereo.

### (Fourth embodiment)

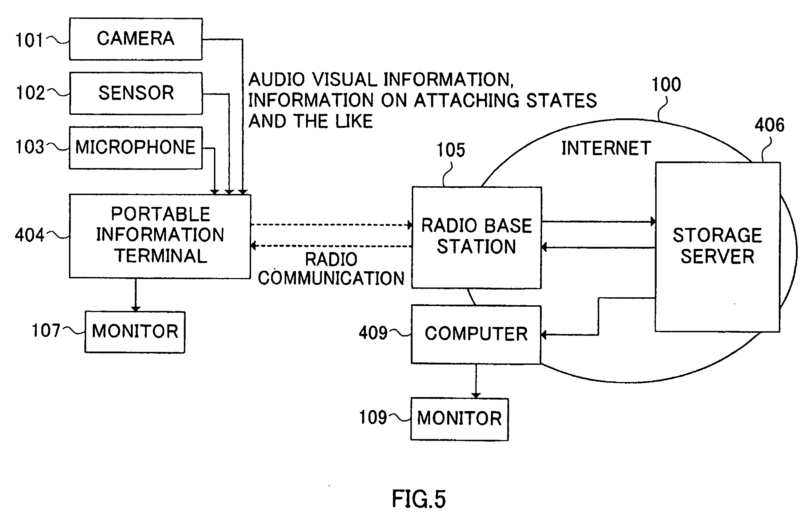

FIG. 5 is a general block diagram of a fourth embodiment of the present invention. This is different from the first embodiment in the points that the camera 101 and the microphone 103 are attached to a human body at a business time, and a processing section (included in a portable information terminal 404 or a storage server 406) for processing business information including a business action, a conversation and a business partner of audio visual information obtained by the camera 101 and the microphone 103 is provided, and business information processed by the processing section is included in storage information including the audio visual information. According to this configuration, since the user can record his/her action in work to refer to his/her past history necessary for business, it is possible to obtain an effect that helps to improve efficiency in business.

In FIG. 5, the camera 101 and the microphone 103, which are attached to the user's body, are connected to the portable information terminal 404, which the user has, and the sensor 102, which detects the attaching states of the camera 101 and the microphone 103, is connected thereto. Moreover, the portable information terminal 404 is provided with switching means (operation display section and the like) for switching the on-off state of the constant recording by the camera 101, the sensor 102 and the microphone 103. Namely, by the switching means, it is switched whether audio visual information, which is obtained by constantly turning on the camera 101, the sensor 102 and the microphone 103, is continuously stored in the storage server 406. Moreover, the monitor 107 is directly connected to the portable information terminal 404. Further, the portable information terminal 404 includes a radio communication function and swaps a radio signal with the radio base station 105. The radio base station 105 is connected to the Internet 100, and further connected to the storage server 406 via the Internet 100 to enable to perform radio communication with the portable information terminal 404. The storage server 406 is connected to the Internet 100 and further connected to the radio base station 105 via the Internet 100. Further, the storage server 406 is provided with judging means (personal authenticating means) for judging whether access to the storage server 406 is valid, and permits only access by a preregistered user. The monitor 109 is directly connected to a computer 409. Furthermore, the computer 409 is connected to the Internet 100, and further connected to the storage server 406 via the Internet 100.

An explanation will next be given of a recording operation of the memory aid system according to the present embodiment. Audio visual information (including image information and acoustic information) obtained by the camera 101 and the microphone 103 attached to the user's body is input to the portable information terminal 404 as business information, thereafter being radio transmitted to the radio base station 105. Additionally, in order to prevent fraud such as replacement of the camera 101 and the microphone 103, information on the attaching states from the sensor 102 is included in audio visual information transmitted from the portable information terminal 404. Sequentially, the radio base station 105 adds a code (time code), which indicates time when the audio visual information was obtained by the radio base station 105, to the transmitted audio visual information and transmits it to the storage server 406 as business information via the Internet 100. The storage server 406 records the transmitted business information.

An explanation will next be given of a referring operation of the memory aid system of the present embodiment. When a reference request signal of storage information is sent to the storage server 406 from the portable information terminal 404 via the radio base station 105 and the Internet 100, or the reference request signal of storage information is sent to the storage server 406 from the computer 110 via the Internet 100, the storage server 406 judges whether this is a valid access by the aforementioned personal authenticating means. Here, when it is judged that this is the valid access, a signal, which indicates audio visual information such as the image and sound and time information, is transmitted as business information onto the Internet 100 from the storage server 406 according to the reference request. The signal thus transmitted onto the Internet 100 is transmitted to the portable information terminal 404 via the Internet 100 and the radio base station 105, or transmitted to the computer 409 via the Internet 100 to be subjected to reproduction processing by the portable information terminal 404 or the computer 409. After being subjected to the reproduction processing in this way, the pertinent audio visual information is displayed on the monitor 107 or the monitor 109. Here, on the monitors 107 and 109, time information such as time when the pertinent audio visual information was obtained by radio base station 105 is displayed together with the pertinent audio visual information including information on the attaching states.

Here, the following will explain an effect when the memory aid system of the present embodiment is used. According to the present embodiment, the user can record his/her action in work and refer to his/her past history necessary for business. Generally, it is important to memorize his/her business partner's face as in the custom of exchanging business cards. The memory aid system of the present embodiment enables the user to confirm the partner' s face and name whom he/she has met only one time any time as necessary. For example, the user to which the camera 101 is attached looks at the business card immediately after the business cards are exchanged, thereby enabling the user to confirm both partner's face and name at the time of referring to the audio visual information later. This further increases the effect of the memory aid relating to the business partner by use of the memory aid system of the present embodiment. Moreover, for instance, this enables his/her boss to confirm his/her subordinate business history by referring to the audio video information. Furthermore, the use of the sensor 102 that detects the attaching states of the camera 101 and the microphone 103 increases reliability of the recorded audio visual information, thereby enabling to carry out a simple contract with the record of a verbal promise.

Additionally, the above embodiment explained the case in which the authenticating means provided in the storage server 406 was used as means for maintaining the security of the storage server 406 at the referring time. However, the present invention can obtain the same effect even if personal authenticating means that performs personal authentication to judge the user to which the camera 101, the microphone 103 and the sensor 102 are attached or the vehicle is valid or personal authenticating means provided to maintain the security at the registering time to the storage server 406 is used besides the authenticating means provided in the storage server 406.

Moreover, the above embodiment explained the case in which one having the function that detects the attaching state to the body was used as the sensor 102 attached to the user's body. However, the present invention can obtain the same effect even if one having a function that detects information on the sense of touch, information on the sense of taste, information on the sense of smell, and body information (for example, a heartbeat, a body inclination state and the like) in addition to the attaching state to the body.

Furthermore, the above embodiment explained the case in which the code indicative of obtaining time of the audio visual information was added in the radio base station 105. However, in addition to this, the present invention can obtain the same effect even if a configuration that adds a code indicative of obtaining time of the audio visual information (herein, input time from the camera 101, the sensor 102, and the microphone 103) in the portable information terminal 404 and a configuration that adds a code indicative of obtaining time of the audio visual information (herein, storage time of the storage information) in the storage server 406 are used. In the case of using such the configurations, time information such as time when the pertinent audio visual information (image information and acoustic information) was stored in the storage server 406 and time when the pertinent audio visual information was obtained by the portable information terminal 404 is simultaneously stored, and time information such as time when the pertinent audio visual information was stored and time when the pertinent information was obtained by the portable information terminal 304 is displayed on the monitors 107 and 109.

Additionally, in the case where the aforementioned acoustic information is recorded, not only the use of the monophonic recording but also the use of a stereo system using a stereo microphone and the use of a surround system such as a binaural recording using microphones provided in both auricles enable to record acoustic information with a higher sense of realism. Furthermore, it is possible to determine the position of an acoustic image perceived at the time of referring to recording record. Moreover, an embodiment that enables recoding in the form that distance information is added to user's visual information can be easily realized by converting the record of visual information to stereo.

### (Fifth embodiment)

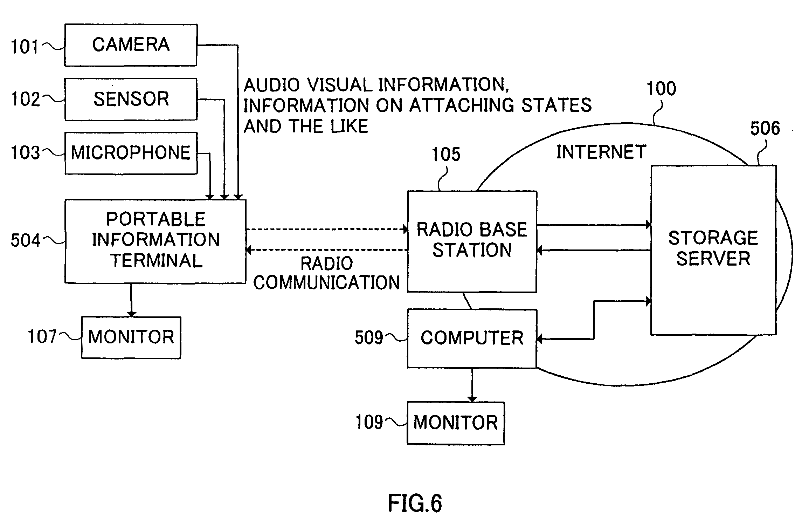

FIG. 6 is a general block diagram of a fifth embodiment of the present invention. This is different from the first embodiment in the points that the camera 101 and the microphone 103 are attached to a human body at a learning time, and a processing section (included in a portable information terminal 504 or a storage server 506) for processing learning information including a learning state of audio visual information obtained by the camera 101 and the microphone 103 is provided, and learning information processed by the processing section is included in storage information including the audio visual information. According to this configuration, it is possible to obtain an effect in which the user is set free from time and effort of memorization, so that the user can focus his/her energy on only the intellectual activity, that is the use of storage contents.

In FIG. 6, the camera 101 and the microphone 103, which are attached to the user's body, are connected to the portable information terminal 504, which the user has, and the sensor 102, which detects the attaching states of the camera 101 and the microphone 103, is connected thereto. Moreover, the portable information terminal 504 is provided with switching means (operation display section and the like) for switching the on-off state of the constant recording by the camera 101, the sensor 102 and the microphone 103. Namely, by the switching means, it is switched whether audio visual information, which is obtained by constantly turning on the camera 101, the sensor 102 and the microphone 103, is continuously stored in the storage server 506. Moreover, the monitor 107 is directly connected to the portable information terminal 504. Further, the portable information terminal 504 includes a radio communication function and swaps a radio signal with the radio base station 105. The radio base station 105 is connected to the Internet 100, and further connected to the storage server 506 via the Internet 100 to enable to perform radio communication with the portable information terminal 504. The storage server 506 is connected to the Internet 100 and further connected to the radio base station 105 via the Internet 100. Further, the storage server 506 is provided with judging means (personal authenticating means) for judging whether access to the storage server 506 is valid, and permits only access by a preregistered user. The monitor 109 is directly connected to a computer 509. Furthermore, the computer 509 is connected to the Internet 100, and further connected to the storage server 506 via the Internet 100.

An explanation will next be given of a recording operation of the memory aid system according to the present embodiment. Audio visual information obtained by the camera 101 and the microphone 103 attached to the user' s body is input to the portable information terminal 504 as learning information, thereafter being radio transmitted to the radio base station 105. Information on the attaching states from the sensor 102 is included in audio visual information transmitted from the portable information terminal 504. Sequentially, the radio base station 105 adds a code (time code) indicating reception time to the transmitted audio visual information and transmits it to the storage server 506 as learning information via the Internet 100. The storage server 506 records the transmitted learning information.

An explanation will next be given of a referring operation of the memory aid system of the present embodiment. When a reference request signal of storage information is sent to the storage server 506 from the portable information terminal 504 via the radio base station 105 and the Internet 100, or the reference request signal of storage information is sent to the storage server 506 from the computer 509 via the Internet 100, the storage server 506 judges whether this is a valid access by the aforementioned personal authenticating means. Here, when it is judged that this is the valid access, a signal, which indicates audio visual information (including information on the attaching states) such as the image and sound and time information, is transmitted as learning information onto the Internet 100 from the storage server 506 according to the reference request. The signal thus transmitted onto the Internet 100 is transmitted to the portable information terminal 504 via the Internet 100 and the radio base station 105, or transmitted to the computer 509 via the Internet 100 to be subjected to reproduction processing by the portable information terminal 504 or the computer 509. After being subjected to the reproduction processing in this way, the pertinent audio visual information is displayed on the monitor 107 or the monitor 109. Here, time information such as time when the pertinent audio visual information was stored in the storage server 506 and time the pertinent information was obtained by the portable information terminal 504 is output onto the monitors 107 and 109 together with the pertinent health information. Additionally, in a case where the learning contents are organized by subjects, semesters (terms) and the like, audio visual information (learning information) stored in the storage server 509 is compiled by the operation of the computer 509.

Here, the following will explain an effect when the memory aid system of the present embodiment is used. According to the present embodiment, the user can record audio visual information at the learning time. For example, the user can record all the contents of lessons at school and refer to them. Accordingly, since this eliminates the need for writing on the blackboard during class, the user can be set free from time and effort of writing on blackboard and concentrates his/her consciousness on the understanding of the learning contents. Moreover, the use of the memory aid system in reading books and documents enables the user to read the book, which the user has once read, over and over again. Furthermore, when compiling the learning contents using a notebook, a chart, and the like, the user can confirm, after learning, the degree of his/her understanding of the learning contents and time information at the learning time by recording audio visual information at the time of compiling the learning contents and referring it by the memory aid system.

Moreover, since a time code is added to audio visual information recorded on the storage server 506, audio visual information on the learning can be managed at one time and the use of an application program for referring to the learning contents efficiently enables the user to refer to the contents learned in the past immediately. The user can refer to the contents, which he/she learned, anywhere and anytime by referring to audio visual information on the learning by the monitor 107 connected to the portable information terminal 504. For this reason, the user can be set free from all simple memory work. As is obvious from the above explanation, as a substitute for the user, the aforementioned memory aid system can carry out all user's memory work at the learning time. At this mime, tasks necessary for the user at the learning time are the efficient use of audio visual information obtained by the camera 101 and the microphone 103, the search of the method therefor, and the understanding of the learning contents. In other words, by the memory aid system, the user is set free from time and effort of the memory work, so that the user can focus his/her energy on only the intellectual activity, that is the use of storage contents. Furthermore, this can be interpreted as a state in which the user's storage capacity itself is increased by the use of outer recording media (including portable information terminal 504 and storage server 506 herein).

Additionally, the above embodiment explained the case in which the authenticating means provided in the storage server 406 was used as means for maintaining the security of the storage server 406 at the referring time. However, the present invention can obtain the same effect even if personal authenticating means that performs personal authentication to judge the user to which the camera 101, the microphone 103 and the sensor 102 are attached or the vehicle is valid or personal authenticating means provided to maintain the security at the registering time to the storage 406 is used besides the authenticating means provided in the storage server 406.

Moreover, the above embodiment explained the case in which one having the function that detects the attaching state to the body was used as the sensor 102 attached to the user's body. However, the present invention can obtain the same effect even if one having a function that detects information on the sense of touch, information on the sense of taste, information on the sense of smell, and body information (for example, a heartbeat, a body inclination state and the like) in addition to the attaching state to the body.

Furthermore, the above embodiment explained the case in which the code indicative of obtaining time of the audio visual information was added in the radio base station 105. However, in addition to this, the present invention can obtain the same effect even if a configuration that adds a code indicative of obtaining time of the audio visual information (herein, input time from the camera 101, the sensor 102, and the microphone 103) in the portable information terminal 404 and a configuration that adds a code indicative of obtaining time of the audio visual information (herein, storage time of the storage information) in the storage server 406 are used. In the case of using such the configurations, time information such as time when the pertinent audio visual information (image information and acoustic information) was stored in the storage server 406 and time when the pertinent audio visual information was obtained by the portable information terminal 404 is simultaneously stored, and time information such as time when the pertinent audio visual information was stored and time when the pertinent information was obtained by the portable information terminal 304 is displayed on the monitors 107 and 109.

Additionally, in the case where the aforementioned acoustic information is recorded, not only the use of the monophonic recording but also the use of a stereo system using a stereo microphone and the use of a surround system such as a binaural recording using microphones provided in both auricles enable to record acoustic information with a higher sense of realism. Furthermore, it is possible to determine the position of an acoustic image perceived at the time of referring to recording record. Moreover, an embodiment that enables recoding in the form that distance information is added to user's visual information can be easily realized by converting the record of visual information to stereo.

### (Sixth embodiment)

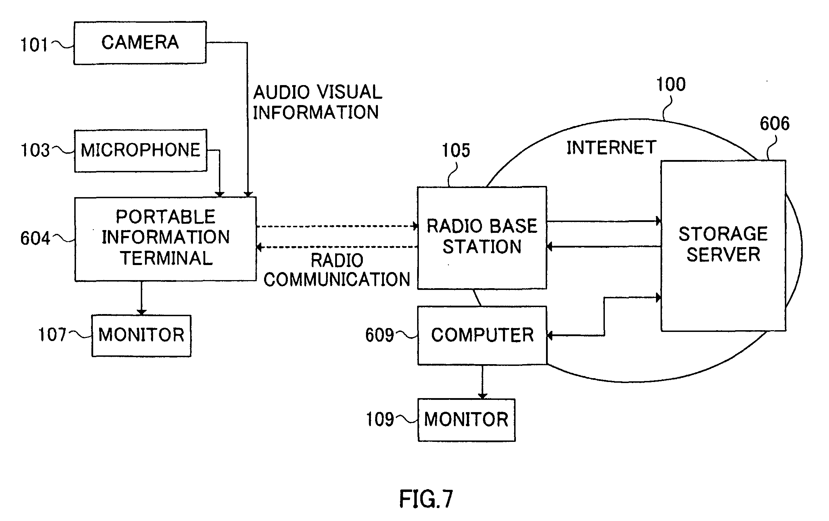

FIG. 7 is a general block diagram of a sixth embodiment of the present invention. This is different from the first embodiment in the points that the camera 101 and the microphone 103 are attached to a human body at a leisure time, and a processing section (included in a portable information terminal 604, a storage server 606, and the like) for processing leisure information including a leisure experience state of audio visual information obtained by the camera 101 and the microphone 103 is provided, and leisure information processed by the processing section is included in storage information including the audio visual information. According to this configuration, it is possible to obtain an effect in which the user can easily record audio visual information at a leisure time.

In FIG. 7, the camera 101 and the microphone 103, which are attached to the user's body or installed in the vicinity of the user, are connected to the portable information terminal 604, which the user has. Moreover, the portable information terminal 604 is provided with switching means (operation display section and the like) for switching the on-off state of the constant recording by the camera 101, the sensor 102 and the microphone 103. Namely, by the switching means, it is switched whether audio visual information, which is obtained by constantly turning on the camera 101, the sensor 102 and the microphone 103, is continuously stored in the storage server 606. Moreover, the monitor 107 is directly connected to the portable information terminal 604. Further, the portable information terminal 604 includes a radio communication function and swaps a radio signal with the radio base station 105. The radio base station 105 is connected to the Internet 100, and further connected to the storage server 606 via the Internet 100 to enable to perform radio communication with the portable information terminal 604. The storage server 606 is connected to the Internet 100 and further connected to the radio base station 105 via the Internet 100. Further, the storage server 606 is provided with judging means (personal authenticating means) for judging whether access to the storage server 606 is valid, and permits only access by a preregistered user. The monitor 109 is directly connected to a computer 609. Furthermore, the computer 609 is connected to the Internet 100, and further connected to the storage server 606 via the Internet 100.

An explanation will next be given of a recording operation of the memory aid system according to the present embodiment. Audio visual information (including image information and acoustic information) obtained by the camera 101 and the microphone 103 attached to the user's body is input to the portable information terminal 204 as leisure information, thereafter being radio transmitted to the radio base station 105. Here, when the image recording state is turned on by the operation of the portable information terminal 604, transmission of audio visual information to the radio base station 105 from the portable information terminal 604 is started, and when the image recording sate is turned off, the transmission of audio visual information to the radio base station 105 from the portable information terminal 604 is stopped. Sequentially, the radio base station 105 adds a code (time code) indicating time when the audio visual information was obtained by the radio base station 105 to the transmitted audio visual information and transmits it to the storage server 606 as leisure information via the Internet 100. The storage server 606 records the transmitted leisure information. Here, when the portable information terminal 604 is operated, time information for a still picture is stored on the storage server 606 by the same communication as mentioned above.

An explanation will next be given of a referring operation of the memory aid system of the present embodiment. When a reference request signal of storage information is sent to the storage server 606 from the portable information terminal 604 via the radio base station 105 and the Internet 100, or the reference request signal of storage information is sent to the storage server 606 from the computer 609 via the Internet 100, the storage server 606 judges whether this is a valid access by the aforementioned personal authenticating means. Here, when it is judged that this is the valid access, a signal, which indicates audio visual information such as the image and sound and time information, is transmitted as leisure information onto the Internet 100 from the storage server 606 according to the reference request. The signal thus transmitted onto the Internet 100 is transmitted to the portable information terminal 604 via the Internet 100 and the radio base station 105, or transmitted to the computer 609 via the Internet 100 to be subjected to reproduction processing by the portable information terminal 604 or the computer 609. After being subjected to the reproduction processing in this way, the pertinent audio visual information is displayed on the monitor 107 or the monitor 109. Here, time information such as time when the pertinent audio visual information was obtained by the radio base station 105 is displayed on the monitors 107 and 109 together with the pertinent information. Additionally, in the case where the user refers to a still picture, reference to time information for still picture is first performed and reference to this time information and time reference added to audio visual information is next performed. Image information at an agreed time is sent to the portable information terminal 604 or the computer 609 as mentioned above.

Here, the following will explain an effect when the memory aid system of the present embodiment is used. The user can easily record audio visual information at a leisure time by the memory aid system. Since the audio visual information is constantly recorded while the user enjoys the leisure, the user is set free from the carriage of a special apparatus such as a video camera and a still camera and the like and time and effort of recording performed by this as required. Furthermore, the user can easily record the still picture by the operation of the portable information terminal 604. This function enables the user to have the same sense of use as the still camera. Since the time code is uniquely added to the audio visual information when the user compiles the audio visual information after enjoying the leisure, an improvement in the convenience of editing can be expected for the user. Furthermore, since the camera 101 is detachable from the user's body, it is possible to shoot the user himself/herself such as a memorial picture.

Additionally, the above embodiment explained the case in which the authenticating means provided in the storage server 606 was used as means for maintaining the security of the storage server 606 at the referring time. However, the present invention can obtain the same effect even if personal authenticating means that performs personal authentication to judge the user to which the camera 101 and the microphone 103 are attached is valid or personal authenticating means provided to maintain the security at the registering time to the storage server 606 is used besides the authenticating means provided in the storage server 606.

Moreover, the same effect can be obtained even if a sensor having a function that detects the attaching states of the camera 101 and the microphone 103 to the user's body, and a sensor having a function that detects information on the sense of touch, information on the sense of taste, information on the sense of smell, and body information (for example, a heartbeat, a body inclination state and the like) are used though they are not particularly used in the above embodiment.

Furthermore, the above embodiment explained the case in which the code indicative of obtaining time of the audio visual information was added in the radio base station 105. However, in addition to this, the present invention can obtain the same effect even if a configuration that adds a code indicative of obtaining time of the audio visual information (herein, input time from the camera 101, the sensor 102, and the microphone 103) in the portable information terminal 604 and a configuration that adds a code indicative of obtaining time of the audio visual information (herein, storage time of the storage information) in the storage server 606 are used. In the case of using such the configurations, time information such as time when the pertinent audio visual information (image information and acoustic information) was stored in the storage server 606 and time when the pertinent audio visual information was obtained by the portable information terminal 604 is simultaneously stored, and time information such as time when the pertinent audio visual information was stored and time when the pertinent information was obtained by the portable information terminal 604 is displayed on the monitors 107 and 109.

Additionally, in the case where the aforementioned acoustic information is recorded, not only the use of the monophonic recording but also the use of a stereo system using a stereo microphone and the use of a surround system such as a binaural recording using microphones provided in both auricles enable to record acoustic information with a higher sense of realism. Furthermore, it is possible to determine the position of an acoustic image perceived at the time of referring to recording record. Moreover, an embodiment that enables recoding in the form that distance information is added to user's visual information can be easily realized by converting the record of visual information to stereo.

### (Seventh embodiment)

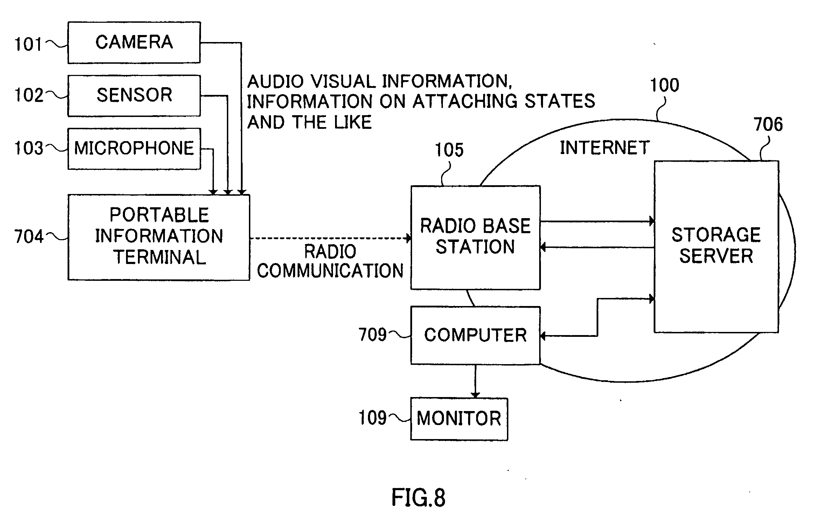

FIG. 8 is a general block diagram of a seventh embodiment of the present invention. This is different from the first embodiment in the points that the camera 101 and the microphone 103 are attached to a human body, a sensor 302 that detects health conditions of the human body is further provided, and information on the health conditions is included in storage information stored in a storage server 706. According to this configuration, since the health conditions such as blood pressure, pulse, body temperature, blood-sugar level and like obtained by the sensor 302 are constantly recorded, it is possible to obtain an effect that can carry out management of the user' s past health conditions and monitoring of the current health conditions.

In FIG. 8, the camera 101 and the microphone 103, which are attached to the user' s body, are connected to the portable information terminal 704, which the user has. Further, the sensor 302, which detects the attaching states of the camera 101 and the microphone 103 and also detects information on the sense of touch, information on the sense of taste, information on the sense of smell, and body information (for example, blood pressure and pulse, body temperature, blood-sugar level, body inclination state and the like), is connected thereto. Moreover, the portable information terminal 704 includes a processing section that processes the body information and works and creates desired information (for example, one relating to meal and evacuation to be described later). Furthermore, the portable information terminal 704 includes a radio communication function and swaps a radio signal with the radio base station 105. Moreover, the portable information terminal 704 is provided with switching means (operation display section and the like) for switching the on-off state of the constant recording by the camera 101, the sensor 302 and the microphone 103. Namely, by the switching means, it is switched whether audio visual information, which is obtained by constantly turning on the camera 101, the sensor 302 and the microphone 103, is continuously stored in the storage server 706. Moreover, the radio base station 105 is connected to the Internet 100, and further connected to the storage server 706 via the Internet 100 to enable to perform radio communication with the portable information terminal 704. The storage server 706 is connected to the Internet 100 and further connected to the radio base station 105 via the Internet 100. Further, the storage server 706 is provided with judging means (personal authenticating means) for judging whether access to the storage server 706 is valid, and permits only access by a preregistered user. The monitor 109 is directly connected to a computer 709. Furthermore, the computer 709 is connected to the Internet 100, and further connected to the storage server 706 via the Internet 100.

An explanation will next be given of a recording operation of the memory aid system according to the present embodiment. Audio visual information (including image information and acoustic information) obtained by the camera 101 and the microphone 103 attached to the user's body and information on the user's body (blood pressure, pulse, body temperature, blood-sugar level and the like) obtained by the sensor 302 are input to the portable information terminal 704 as the user's health information, thereafter being radio transmitted to the radio base station 105. In addition, information on the attaching states from the sensor 302 is included in audio visual information sent from the portable information terminal 704. Sequentially, the radio base station 105 adds a code (time code) indicating time when the audio visual information was obtained by the radio base station 105 to the transmitted audio visual information such as image and sound and transmits it to the storage server 706 as health information via the Internet 100. The storage server 706 records the transmitted health information.

An explanation will next be given of a referring operation of the memory aid system of the present embodiment. When the user himself/herself or a company that manages the user's health sends a reference request signal of storage information to the storage server 706 from the portable information terminal 704 via the radio base station 105 and the Internet 100, or sends the reference request signal of storage information to the storage server 706 from the computer 709 via the Internet 100, the storage server 706 judges whether this is a valid access by the aforementioned personal authenticating means. Here, when it is judged that this is the valid access, a signal, which indicates information on the user's physical condition, time information and information on the attaching conditions, and audio visual information such as the image and sound, is transmitted as health information onto the Internet 100 from the storage server 706 according to the reference request. The signal thus transmitted onto the Internet 100 is transmitted to the computer 709 via the Internet 100 to be subjected to reproduction processing. After being subjected to the reproduction processing in this way, the pertinent health information is displayed on the monitor 109. Here, time information such as time when the image and sound included in the pertinent health information was obtained by the radio base station 105 is output onto the monitor 109 together with the pertinent health information.

Here, the following will explain an effect when the memory aid system of the present embodiment is used. Since the user's health conditions such as blood pressure, pulse, body temperature, blood-sugar level and the like are constantly recorded by the memory aid system, the user can carry out management of the user' s past health conditions and monitoring of the current health conditions. Moreover, it is possible to record the meal and evacuation from the stored audio visual information. For example, by referring to audio visual information on the meal, time when the meal was taken can be obtained from time information added to the audio visual information and the contents of the meal can be obtained from image information of the audio visual information, allowing an analysis on the user's meal. Moreover, by referring to the audio visual information on the time when the user went to the toilet, evacuation time can be obtained from time information added to the audio visual information and the contents of feces can be obtained from image information of the audio visual information, allowing an analysis on the user's evacuation. Still moreover, the contents of the meal can be seen as an image, and this allows a nutritional analysis.

Additionally, the above embodiment explained the case in which the camera 101, the senor 302, and the microphone 103 were used as various information obtaining means of the portable information terminal 704. In addition to this, the present invention can obtain the same effect even if Global Positioning System (GPS) and the like are used. Furthermore, by providing a position specifying function that specifies a monitoring position (user's position) by the global positioning system, it is possible to refer to information on the user' s position to send an ambulance to the user immediately when a dangerous state occurs, for example, a case when the user has a fit, a case the user meets with an accident, the like.

Additionally, the above embodiment explained the case in which the authenticating means provided in the storage server 706 was used as means for maintaining the security of the storage server 706 at the referring time. However, the present invention can obtain the same effect even if personal authenticating means that performs personal authentication to judge the user to which the camera 101, the sensor 302 and the microphone 103 are attached is valid or personal authenticating means provided to maintain the security at the registering time to the storage server 706 is used besides the authenticating means provided in the storage server 706.

Furthermore, the above embodiment explained the case in which the code indicative of obtaining time of the audio visual information was added in the radio base station 105. However, in addition to this, the present invention can obtain the same effect even if a configuration that adds a code indicative of obtaining time of the audio visual information (herein, input time from the camera 101, the sensor 302, and the microphone 103) in the portable information terminal 704 and a configuration that adds a code indicative of obtaining time of the audio visual information (herein, storage time of the storage information) in the storage server 706 are used. In the case of using such the configurations, time information such as time when the pertinent audio visual information (image information and acoustic information) was stored in the storage server 706 and time when the pertinent audio visual information was obtained by the portable information terminal 604 is simultaneously stored, and time information such as time when the pertinent audio visual information was stored and time when the pertinent information was obtained by the portable information terminal 604 is displayed on the monitors 107 and 109.

Additionally, in the case where the aforementioned acoustic information is recorded, not only the use of the monophonic recording but also the use of a stereo system using a stereo microphone and the use of a surround system such as a binaural recording using microphones provided in both auricles enable to record acoustic information with a higher sense of realism. Furthermore, it is possible to determine the position of an acoustic image perceived at the time of referring to recording record. Moreover, an embodiment that enables recoding in the form that distance information is added to user's visual information can be easily realized by converting the record of visual information to stereo.

### (Eighth embodiment)

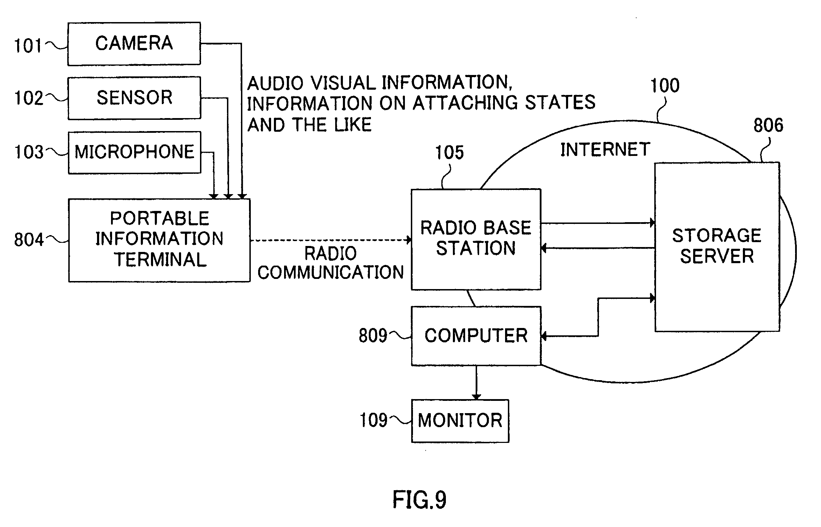

FIG. 9 is a general block diagram of an eighth embodiment of the present invention. This is different from the first embodiment in the points that a global positioning system (GPS) is provided to a portable information terminal 804 and position information on a monitoring position obtained by the global positioning system is included in storage information stored in a storage sever 806. According to this configuration, when some accident happens to the user and the user is missing, it is possible to obtain an effect that efficiently performs a search for the missing and processing for a sudden accident.

In FIG. 9, the camera 101 and the microphone 103, which are attached to the user's body, are connected to the portable information terminal 804, which the user has. Further, the sensor 102, which detects the attaching states of the camera 101 and the microphone 103, is connected thereto. Moreover, the portable information terminal 804 includes a global positioning system (hereinafter referred to as GPS) function and a radio communication function and swaps a radio signal with the radio base station 105. Moreover, the portable information terminal 804 is provided with switching means (operation display section and the like) for switching the on-off state of the constant recording by the camera 101, the sensor 102 and the microphone 103. Namely, by the switching means, it is switched whether audio visual information, which is obtained by constantly turning on the camera 101, the sensor 102 and the microphone 103, is continuously stored in the storage server 806. Moreover, the radio base station 105 is connected to the Internet 100, and further connected to the storage server 806 via the Internet 100 to enable to perform radio communication with the portable information terminal 804. The storage server 806 is connected to the Internet 100 and further connected to the radio base station 105 via the Internet 100. Further, the storage server 806 is provided with judging means (personal authenticating means) for judging whether access to the storage server 806 is valid, and permits only access by a preregistered user. The monitor 109 is directly connected to a computer 809. Furthermore, the computer 809 is connected to the Internet 100, and further connected to the storage server 806 via the Internet 100.

An explanation will next be given of a recording operation of the memory aid system according to the present embodiment. Audio visual information (including image information and acoustic information) obtained by the camera 101 and the microphone 103 attached to the user's body is input to the portable information terminal 804 as life recorder information on the user, thereafter being radio transmitted to the radio base station 105. In addition, position information obtained by the GPS function and information on the attaching states from the sensor 102 are included in audio visual information sent from the portable information terminal 804. Sequentially, the radio base station 105 adds a code (time code) indicating time when the audio visual information was obtained by the radio base station 105 to the transmitted audio visual information and transmits it to the storage server 806 as life recorder information via the Internet 100. The storage server 806 records the transmitted life recorder information.

An explanation will next be given of a referring operation of the memory aid system of the present embodiment. When an accident happens to the user and the need for grasping the news arises, a reference request signal of storage information is sent to the storage server 806 from the computer 809 via the Internet, the storage server 806 judges whether this is a valid access by the aforementioned personal authenticating means. Here, when it is judged that this is the valid access, a signal, which indicates position information by the GPS function, time information and information on the attaching states and audio visual information such as image and sound, is transmitted as life recorder information onto the Internet 100 from the storage server 806 according to the reference request. The signal thus transmitted onto the Internet 100 is transmitted to the computer 809 via the Internet 100 to be subjected to reproduction processing. After being subjected to the reproduction processing in this way, the pertinent life recorder information is displayed on the monitor 109. Here, time information such as time when audio visual information included in the pertinent life recorder information was obtained by the radio base station 105 is output onto the monitor 109 together with the pertinent life recorder information.

Here, the following will explain an effect when the memory aid system of the present embodiment is used. Similar to an airplane flight recorder, all of audio visual information indicating news about the user can be recorded by the memory aid system. In other words, since audio visual information obtained by the camera 101 and the microphone 103, information on the attaching states obtained by the sensor 102, position information obtained by the global positioning system, and time information on these information items are recorded on the storage server 806, when some accident happens to the user and the user is missing, the aforementioned audio visual information, position information and time information can be used in the search for the missing and the survey of a sudden accident. Moreover, the use of the memory aid system enables, for example, the life insurance company to minutely know the circumstance of the user at the occurrence of the accident to carry out the survey of the accident and the like efficiently, allowing the reduction required for processing the accident.

Additionally, the above embodiment explained the case in which the authenticating means provided in the storage server 806 was used as means for maintaining the security of the storage server 806 at the referring time. However, the present invention can obtain the same effect even if personal authenticating means that performs personal authentication to judge the user to which the camera 101, the sensor 102 and the microphone 103 are attached or the vehicle is valid or personal authenticating means provided to maintain the security at the registering time to the storage server 806 is used besides the authenticating means provided in the storage server 806 besides the aforementioned personal authenticating means provided in the storage server 806.

Moreover, the above embodiment explained the case in which one having the function that detects the attaching state to the body was used as the sensor 102 attached to the user's body. However, the present invention can obtain the same effect even if one having a function that detects information on the sense of touch, information on the sense of taste, information on the sense of smell, and body information (for example, a heartbeat, a body inclination state and the like) in addition to the attaching state to the body.

Furthermore, the above embodiment explained the case in which the code indicative of obtaining time of the audio visual information was added in the radio base station 105. However, in addition to this, the present invention can obtain the same effect even if a configuration that adds a code indicative of obtaining time of the audio visual information (herein, input time from the camera 101, the sensor 102, and the microphone 103) in the portable information terminal 804 and a configuration that adds a code indicative of obtaining time of the audio visual information (herein, storage time of the storage information) in the storage server 806 are used. In the case of using such the configurations, time information such as time when the pertinent audio visual information (image information and acoustic information) was stored in the storage server 806 and time when the pertinent audio visual information was obtained by the portable information terminal 804 is simultaneously stored, and time information such as time when the pertinent audio visual information was stored and time when the pertinent information was obtained by the portable information terminal 804 is displayed on the monitors 107 and 109.

Additionally, in the case where the aforementioned acoustic information is recorded, not only the use of the monophonic recording but also the use of a stereo system using a stereo microphone and the use of a surround system such as a binaural recording using microphones provided in both auricles enable to record acoustic information with a higher sense of realism. Furthermore, it is possible to determine the position of an acoustic image perceived at the time of referring to recording record. Moreover, an embodiment that enables recoding in the form that distance information is added to user's visual information can be easily realized by converting the record of visual information to stereo.

As explained above, the present invention can provide a memory aid system including a portable information terminal that adds time information to audio visual information obtained by an image constantly shot at a monitoring position arbitrarily displaced and sound constantly collected thereat and transmits it to a storage server via a communication network, and the storage server that storages audio visual information and time information transmitted from the portable information terminal and transmits the storage information via the communication network according to a reference request of storage information including the audio visual information and time information, thereby overcoming limitations due to the size of a recording medium and the displacement of a monitoring point to allow constant recording of audio visual information that a user perceives in a daily life and time information when the audio visual information was perceived to bring about an excellent effect that enables to refer to arbitrary audio visual information perceived by the user in the past.

This application is based on the Japanese Patent Application No. 2002-043443 filed on February 20, 2002, entire content of which is expressly incorporated by reference herein.

## Claims

1. A memory aid system comprising:
a portable terminal that creates audio visual information including image information and acoustic information from an image shot at a position arbitrarily displaced and sound collected thereat and transmits the audio visual information via a communication network; and
a storage server that makes time information accompany the audio visual information transmitted from said portable terminal to store as storage information and transmits the storage information via the communication network according to a reference request including time information.

2. The memory aid system according to claim 1, wherein said portable terminal adds time information to the created audio visual information to transmit.

3. The memory aid system according to claim 1, further comprising a base station that performs radio communication with said portable terminal and is connected to said storage server via the Internet, wherein said base station adds time information to said audio visual information transmitted from said portable terminal and transmits to said storage server via the Internet.

4. The memory aid system according to claim 1, further comprising a computer apparatus connected to said storage server via the Internet, wherein said computer apparatus sends the reference request to said storage server via the Internet and reproduces the storage information transmitted from said storage server according to the reference request.

5. The memory aid system according to claim 1, wherein said portable terminal performs switching whether the audio visual information is constantly recorded on said storage server.

6. The memory aid system according to claim 1, wherein said portable terminal comprises a shooting section that shoots the circumstance of the arbitrarily displaced position to output an image signal, a sound collecting section that collects sound of the arbitrarily displaced position to output an acoustic signal, and a detecting section that detects the attaching states of said shooting section and said sound collecting section, and transmits information on the detected attaching states together with the audio visual information via the communication network.

7. The memory aid system according to claim 6, wherein said storage server stores the information on the attaching states transmitted from said portable terminal to be included in the storage information.

8. The memory aid system according to claim 1, wherein said portable terminal transmits information indicating the position of the terminal itself together with the audio visual information via the communication network.

9. The memory aid system according to claim 8, wherein said storage server stores information indicating the position of said portable terminal to be included in the storage information.

## Amended claims

### Amended claims under Art. 19.1 PCT

1. (Amended) A memory aid system comprising: a portable terminal that creates audio visual
information including image information and acoustic information from an image shot at a position arbitrarily displaced and sound collected thereat and transmits the audio visual information via a communication network; and
a storage server that makes information for specifying time accompany the audio visual information transmitted from said portable terminal to store as storage information and transmits the storage information via the communication network according to a reference request including information for specifying time.

2. (Amended) The memory aid system according to claim 1, wherein said portable terminal adds information for specifying time to the created audio visual information to transmit.

3. Amended) The memory aid system according to claim 1, further comprising a base station that performs radio communication with said portable terminal and is connected to said storage server via the Internet, wherein said base station adds information for specifying time to said audio visual information transmitted from said portable terminal and transmits to said storage server via the Internet.

4. The memory aid system according to claim 1, further comprising a computer apparatus connected to said storage server via the Internet, wherein said computer apparatus sends the reference request to said storage server via the Internet and reproduces the storage information transmitted from said storage server according to the reference request.

5. The memory aid system according to claim 1, wherein said portable terminal performs switching whether the audio visual information is constantly recorded on said storage server.

6. The memory aid system according to claim 1, wherein said portable terminal comprises a shooting section that shoots the circumstance of the arbitrarily displaced position to output an image signal, a sound collecting section that collects sound of the arbitrarily displaced position to output an acoustic signal, and a detecting section that detects the attaching states of said shooting section and said sound collecting section, and transmits information on the detected attaching states together with the audio visual information via the communication network.

7. The memory aid system according to claim 6, wherein said storage server stores the information on the attaching states transmitted from said portable terminal to be included in the storage information.

8. The memory aid system according to claim 1, wherein said portable terminal transmits information indicating the position of the terminal itself together with the audio visual information via the communication network.

9. The memory aid system according to claim 8, wherein said storage server stores information indicating the position of said portable terminal to be included in the storage information.
